# EUROPEAN PATENT APPLICATION

(11) **EP 1 343 257 A1**
(43) Date of publication of application: **10.09.2003**
(21) Application number: 01270966.3
(22) Date of filing: 13.12.2001
(51) Int. Cl.: H04B 7/185

(54) **MESSAGE SUPPLY SYSTEM**

(30) Priority: 14.12.2000 JP 2000380031; 10.05.2001 JP 2001139924
(71) Applicant: IHI Aerospace Co., Ltd., Tokyo 100-0004 (JP)
(72) Inventor: YAMANAKA, Tsutomu, Tokyo 100-0004 (JP)
(74) Representative: Reinhard - Skuhra - Weise & Partner
(86) International application number: JP0110935
(87) International publication number: WO02049239

(57) **Abstract**

A message supply system in which a sender, a database, a spacecraft, a spacecraft tracking control device and a recipient are interconnected via a communication network, a message of the sender is stored in at least one of the spacecraft navigating while being acquired in position by the tracking control device and the database on the earth, and the message stored in the spacecraft or the database is supplied to the recipient together with details and positional data of the spacecraft at a date designated by the sender. According to the message supply system, it becomes possible to supplying various kinds of messages such as an image and an animation (a memorial message for a birthday or so, a message for praying health recovery, a message for affectionate expression such as a proposal, a message concerning a will or the past course of life) to the recipient including the sender him/herself by designating the date and the number of times, and possible to designate the shape, the flight path, the launching date and the like of the spacecraft charged with the message.

## Description

### TECHNICAL FIELD

The present invention relates to a message supply system using a spacecraft.

### BACKGROUND

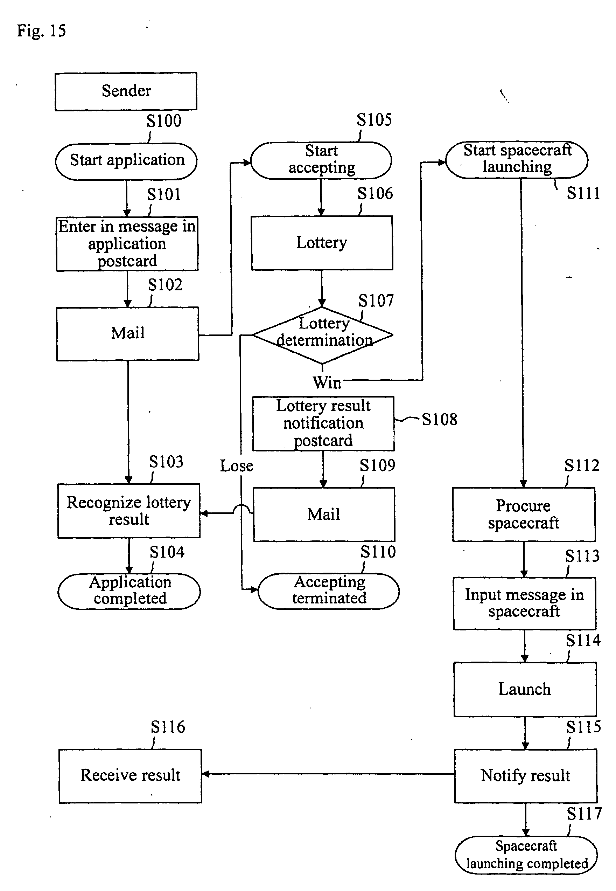

Conventionally, there has been provided, for example, service shown in Fig. 15 similar to the above-mentioned message supply system using the spacecraft.

As shown in Fig. 15, this service is directed for mounting messages of winning senders out of a plurality of senders who applied to the lottery on the spacecraft and launching it, and the flow of the launching is as follows: at first the sender enters a message in an application postcard and mails it according to the time for starting the lottery application (step S100 to step S102); the other side, the lottery promoter notifies the lottery result to the winner after the lottery (step S105 to step 109) and the messages of the winning senders are input into the spacecraft and the launching is performed (step S111 to step S114).

The winning sender recognizes the winning by the notifications postcard from the lottery promoter in step S103, and he/she receives the result in step 116 by the launching result notification from the lottery promoter performed in step S115 after closing the application in step 104.

However, in the conventional service using a spacecraft described above, the sender can receive service for notifying the launching result, but there have been problems that the message of the sender is merely mounted on the spacecraft and the recipient is not present, that a message is limited to the message described on the postcard or so, that a desirable spacecraft cannot be designated due to the service according to the lottery, and that the sender cannot know the position of the spacecraft on which the message is mounted, and it has been a conventional object to solve these problems.

### DISCLOSURE OF THE INVENTION

The present invention has been made in terms of the above problems of such a conventional technique, and it is an object to provide a message supply system capable of supplying various kinds of messages such as an image and an animation (a memorial message for a birthday or so, a message for praying health recovery, a message for affectionate expression such as a proposal, a message concerning a will or the past course of life) to the recipient including the sender him/herself by designating the date and the number of times, and capable of designating the shape, the flight path, the launching date, and the like of the spacecraft in which the message is left, and further capable of confirming the position of the spacecraft, and to provide a message supply system capable of supplying a message with higher representation effect to the recipient including the sender him/herself at the date designated by the sender and at the place where the sender and/or the recipient can visually recognize.

The present inventors have earnestly discussed in order to achieve the above object, and have found that a sender, a database, a spacecraft, a spacecraft tracking control device and a recipient are interconnected via a communication network so that the above object is achieved, and have completed the present invention.

In other words, the message supply system according to the present invention is characterized in that the sender, the database, the spacecraft, the spacecraft tracking control device and the recipient (including a case where recipient is the sender him/herself) are interconnected via the communication network such as Internet, cable TV, and satellite communication network, the message of the sender is stored in at least one of the spacecraft navigating while being acquired in position by the tracking control device and the database on the earth, and the message stored in the spacecraft or the database is supplied to the recipient together with details and positional data of the spacecraft at the date designated by the sender.

Further, a preferable embodiment of the message supply system according to the present invention is characterized in that a message sent from the sender via the communication network is supplied as the message of the sender, another preferable embodiment of the message supply system according to the present invention is characterized in that the message sent from the sender via the communication network to which its own flight image of the spacecraft or flight images of other spacecrafts and/or a space body image photographed by the spacecraft is attached is supplied as the message of the sender, and still another preferable embodiment of the message supply system according to the present invention is characterized in that an album made by accumulating the flight image of the spacecraft itself or the flight images of the other spacecrafts and/or the space body image photographed by the spacecraft in the database is attached to the message sent from the sender via the communication network.

In this time, the message of the sender may be stored in any one of the spacecraft and the database on the ground when the spacecraft goes around the earth orbit, but it is desirable to store the message of the sender in the database on the ground in consideration of that the spacecraft moves away from the earth when the spacecraft flies in the interstellar space.

Further, there may be configured so that the sender designates the photographing conditions (conditions such as direction, orientation, lens aperture, and the like) of the flight image of the spacecraft itself or the flight images of the other spacecrafts and/or the space body image photographed by the spacecraft.

Further, when the flight image of the spacecraft itself or the flight images of the other spacecrafts is photographed, especially when these images are made into album, ornaments having a sense of the season such as Christmas decoration, Star Festival decoration and the like may be applied on the spacecraft, and other ornaments possible to further visually represent the wish or the commemoration of the sender may be applied on the spacecraft. In this time, it is possible to further improve the representation effect by sending the image of the decorated spacecraft mounted with Christmas cards, strips of fancy paper strings of thousands folded-paper cranes or commemoration plates collected from the sender before the launching.

Furthermore, when the message stored in the spacecraft or the database is supplied to the recipient at the date designated by the sender, it is also possible to give feeling such that the message supply is performed inside the spaceship by supposing the sender and the recipient to be the crew of the spaceship.

The message supply system according to this invention which supplies the message with higher representation effect is characterized in that the sender, the database, the spacecraft capable of forming a visual message, the spacecraft tracking control device, and the recipient are interconnected via the communication network such as Internet, cable TV, and the satellite communication network, specified details of the visual message sent from the sender via this communication network are stored in at least one of the spacecraft navigating while being acquired in position by the tracking control device and a database on the earth, and a visual message desired by the sender is formed on the basis of the specified details of the visual message stored in the spacecraft or the database at the date designated by the sender and at the place where the sender and/or the recipient can visually recognize.

Further, a preferable embodiment of the message supply system according to the present invention is characterized in that the visual message is a luminous phenomenon such as aurora or an artificial shooting star generated by the spacecraft, another preferable embodiment of the message supply system according to the present invention is characterized in that the visual message is a character string or a picture formed by selectively flashing a plurality of emitters provided to the spacecraft, and still another preferable embodiment of the message supply system according to the present invention is characterized in that the visual message is a character string or a picture formed by applying sunlight on a plurality of reflectors provided to the spacecraft and selectively reflecting the sunlight from the reflectors.

Further, still another preferable embodiment of the message supply system according to the present invention is characterized in that the visual message is a character string or a picture formed by causing spacecrafts having a luminous function to fly in a formation, and still another preferable embodiment of the message supply system according to the present invention is characterized in that an image of a character string or a picture is supplied as the visual message to the recipient via the communication network.

Further, still another preferable embodiment of the message supply system according to the present invention is characterized in that the visual message is a character string or a picture formed by scanning a laser beam on a display panel provided to the spacecraft, and still another preferable embodiment of the message supply system according to the present invention is characterized in that the visual message is a character string or a picture formed by applying sunlight on a display panel provided to the spacecraft, where the display panel includes an outer wall of the spacecraft in addition to a thin metallic film or a solar cell panel.

Furthermore, still another preferable embodiment of the message supply system according to the present invention is characterized in that the visual message is a character string or a picture formed by applying a laser beam radiated from the spacecraft or sunlight reflected from the spacecraft on a reflector (a space body such as the earth including clouds, the moon or the like, the spacecraft in itself, or other spacecrafts).

In addition, in the message supply system according to the present invention, the details of the spacecraft means something about the spacecraft such as the shape, the flight path, the launching date, and the like of the spacecraft, the specified details of the visual message means something about data of the visual message such as the position where the visual message is formed, the forming date, the size, and the like, and means something about data of the luminous phenomenon such as the generating place, the generating date, the pattern and the like in the case of the luminous phenomenon such as the artificial shooting star or aurora, for example.

Furthermore, in the message supply system according to the present invention, when the visual message is the character string or the picture, time-sequential character strings or animations may be employed by changing along with the passage of time without limiting to still characters or still images.

In the aforementioned message supply system in which the sender, the database, the spacecraft, the spacecraft tracking control device and the recipient are interconnected via the communication network, the message of the sender is stored in at least one of the spacecraft navigating while being acquired in position by the tracking control device and the database on the earth, and the message stored in the spacecraft or the database is supplied to the recipient together with the details and the positional data of the spacecraft at the date designated by the sender, and in the message supply system where the message sent from the sender via the communication network is supplied as the message of the sender, it is possible to supply the message including unrestricted expressions by designating the date and time, the number of times and the like to the recipient designated by the sender, and additionally possible to select the details of the spacecraft such as the shape, the flight path, the launching date and so on of the spacecraft, and also possible to confirm the position of the spacecraft by which the sender and the recipient are connected via the communication network.

According to the preferable embodiment of the message supply system where the message sent from the sender via the communication network to which the flight image of the spacecraft in itself or the flight images of the other spacecrafts and/or the space body image photographed by the spacecraft is attached is supplied as the message of the sender, since the flight image of the spacecraft and/or the space body image to be photographed by the spacecraft is attached to the message, it is possible to strongly recognize the fact that the message from the sender is sent though the universe. According to the preferable embodiment of the message supply system where the album made by accumulating the flight image of the spacecraft and/or the space body image photographed by the spacecraft in the database is attached to the message sent from the sender via the communication, a sense of the season is included in the message so that the more impressive message can be supplied.

Furthermore, since the message supply system using the spacecraft capable of forming the visual message according to the present invention has the above configuration, the visual message desired by the sender can be formed at the date designated by the sender and at the place where the sender and/or the recipient can visually recognize so that the message with higher representation effect can be supplied to the recipient, and especially in the message supply system where the image of the character string or the picture is supplied as the visual message to the recipient via the communication network, the message with high representation effect can be supplied irrespectively of weather.

### BRIEF DESCRIPTION OF THE DRAWINGS

Fig. 1 is a block diagram showing an example of the message supply system according to the present invention;
Figs. 2 to 4 are flow charts for explaining the message supply system shown in Fig. 1;
Fig. 5 is a block diagram showing another example of the message supply system according to the present invention;
Fig. 6 is a flow chart corresponding to Fig. 3 used for explaining the previously mentioned example for explaining the message supply system shown in Fig. 5;
Fig. 7 is a block diagram showing still another example of the message supply system according to the present invention;
Figs. 8 to 10 are flow charts for explaining the message supply system shown in Fig. 7;
Fig. 11 is a block diagram showing still another example of the message supply system according to the present invention;
Fig. 12 is a flow chart corresponding to Fig. 3 used for explaining the previously mentioned example for explaining the message supply system shown in Fig. 11;
Fig. 13 is a block diagram showing still another example of the message supply system according to the present invention;
Fig. 14 is a flow chart corresponding to Fig. 3 used for explaining the previously mentioned example for explaining the message supply system shown in Fig. 13; and
Fig. 15 is a flow chart for explaining a service similar to that of the conventional message supply system.

### BEST MODE FOR CARRYING OUT THE INVENTION

Hereinafter, the present invention will be further described in detail with reference to examples, but the present invention is not limited thereto.

### (First example)

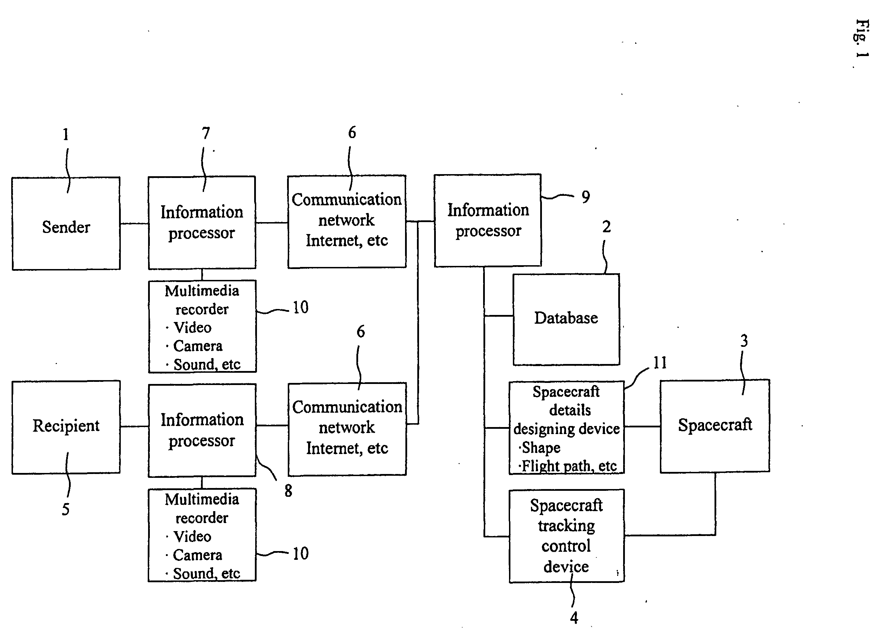

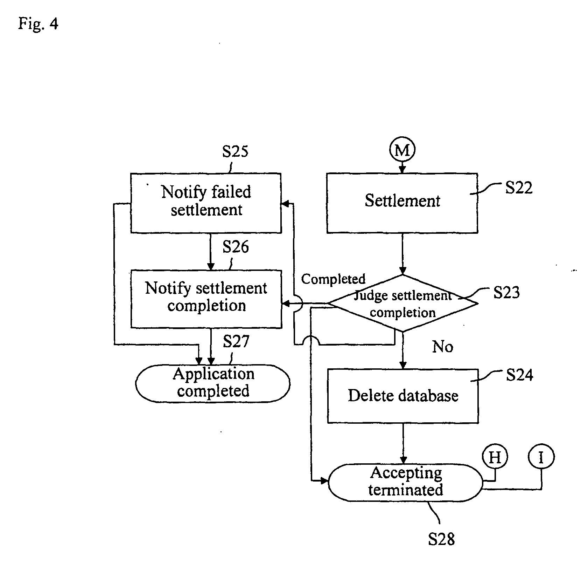

Fig. 1 to Fig. 4 show an example of the message supply system according to the present invention, and this message supply system is configured so that a sender 1, a database 2, a spacecraft 3, a tracking control device 4 of this spacecraft 3, and a recipient 5 are interconnected via a communication network 6 such as Internet, as shown in Fig. 1.

This communication network 6 is connected with an information processor 7 for sender, an information processor 8 for recipient, and an information processor 9 for database, the information processor for sender 7 and the information processor for recipient 8 are respectively connected with multimedia recorders 10, and the spacecraft 3 is connected with a spacecraft details designing device 11.

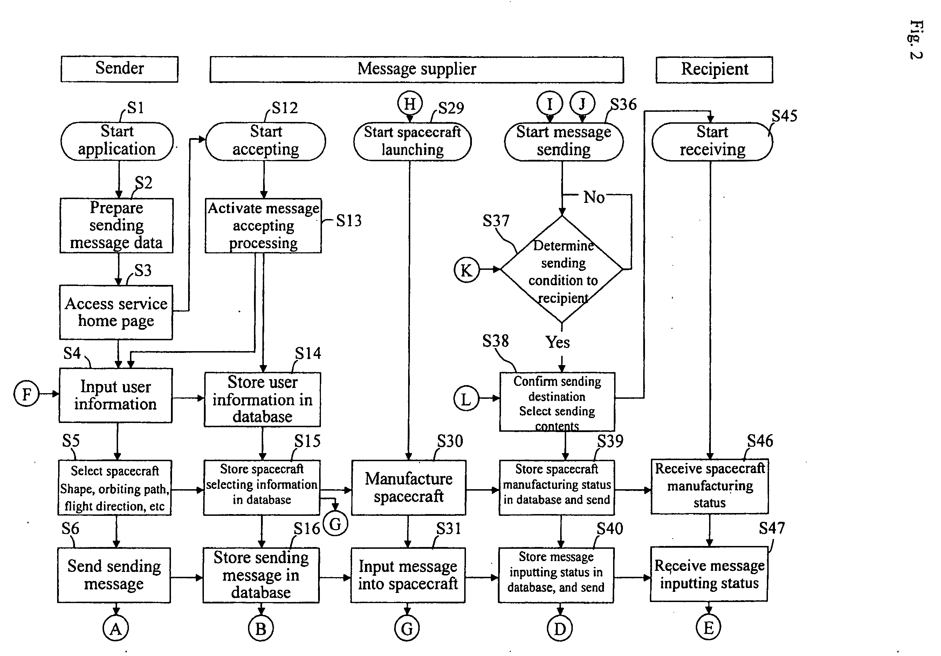

In this message supply system, as shown in Figs. 2 to 4, the sender 1 accesses the home page of a message supplier at first, and performs inputting of user information, selecting of details of the spacecraft 3, sending of a message, designating of the recipient 5, designating of sending parameters to the reception, and designating of terms of payment to the message supplier (step 1 to step 9).

On the side of the message supplier side, in response to the access from the sender 1, the user information, the spacecraft detail selecting information, the message, the recipient information, the sending parameters to the reception and the payment terms are stored in the database 2 (step 12 to step 19), and these registered contents are returned to the sender 1 (step 20).

When confirmation of the registered contents and judgement of the inputting completion are done by the sender 1 (step 10 and step 11), the completion of the input is stored in the database 2 in step 21, and settlement for this application is carried out in step 22 to step 28, the above information stored in the database 2 is deleted entirely when the settlement fails.

When this settlement is completed, a launching program is finished through the steps of manufacture of the selected spacecraft 3, the message inputting into the spacecraft 3, manufacture (procurement) and launching of a booster-rocket, and tracking start of the spacecraft 3 by the tracking control device (step 29 to step 35).

The spacecraft 3 may be manufactured in a custom-made manner after the input by the user in some cases, and may be manufactured according to a certain number of applications by users on the basis of details determined by the message supplier in advance in other cases.

When judgement of the sending condition for the recipient 5 and confirmation of a sending destination are performed in step 36 to step 38 according to the launching of this spacecraft 3, the manufacturing status of the spacecraft 3, the inputting status of the message, the manufacture (procurement) and launching of the booster-rocket, and the spacecraft tracking control status are stored in the database 2 in step 39 to step 44, and the information concerning these statuses is sent to the recipient 5.

The recipient 5 receives the message stored in the spacecraft 3 at the date designated by the sender 1 together with the details and the positional data of the spacecraft 3 in step 45 to step 50, whereby the message supply from the sender 1 is completed.

Therefore, in the message supply system described above, the message including unrestricted expressions can be supplied by designating the date, the number of times and so on to the recipient 5 designated by the sender 1, and additionally the details of the spacecraft 3 such as the shape, the flight path, the launching date and the like of the spacecraft 3 can be selected according to the request of the sender 1, and further the position or the path of the spacecraft 3 can be confirmed.

### (Second example)

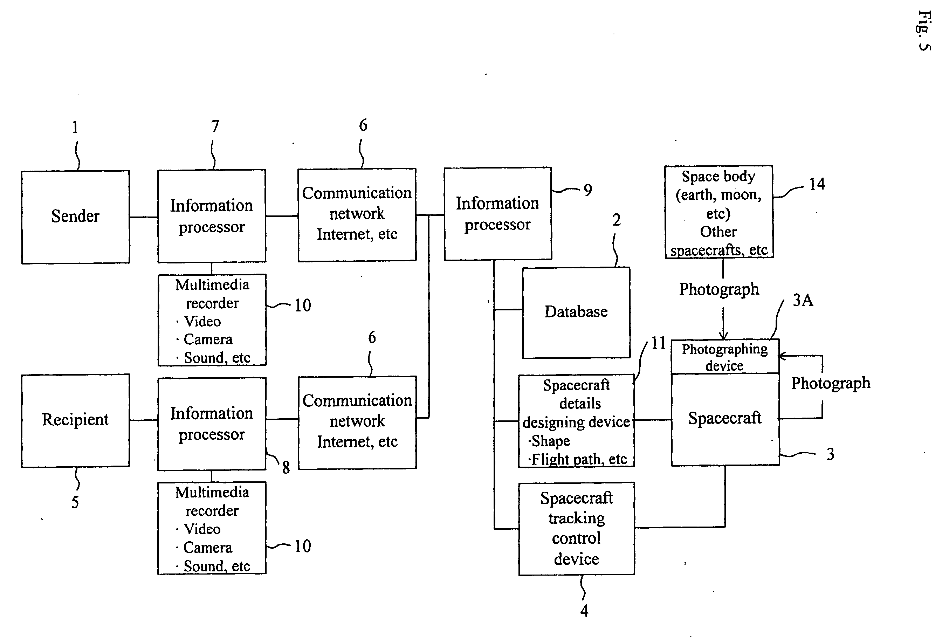

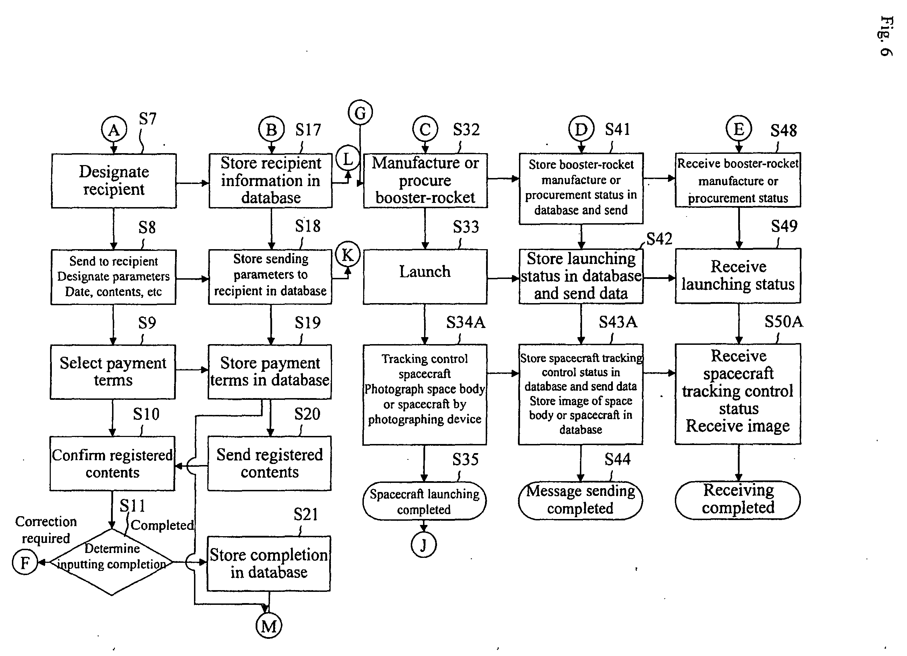

Fig. 5 and Fig. 6 show another example of the message supply system according to the present invention, the message supply system according to this example is different from the message supply system according to the previous example in the point that a photographing device 3A capable of photographing an image of a space body 14 such as the earth or the moon (including other spacecrafts) and its own flight image of the spacecraft 3 is mounted on the spacecraft 3 as shown in Fig. 5 so as to attach the flight image of the spacecraft 3 in itself and/or the image of the space body 14 photographed by this photographing device 3A to the message of the sender, and the other configuration is the same as that of the message supply system according to the previous example.

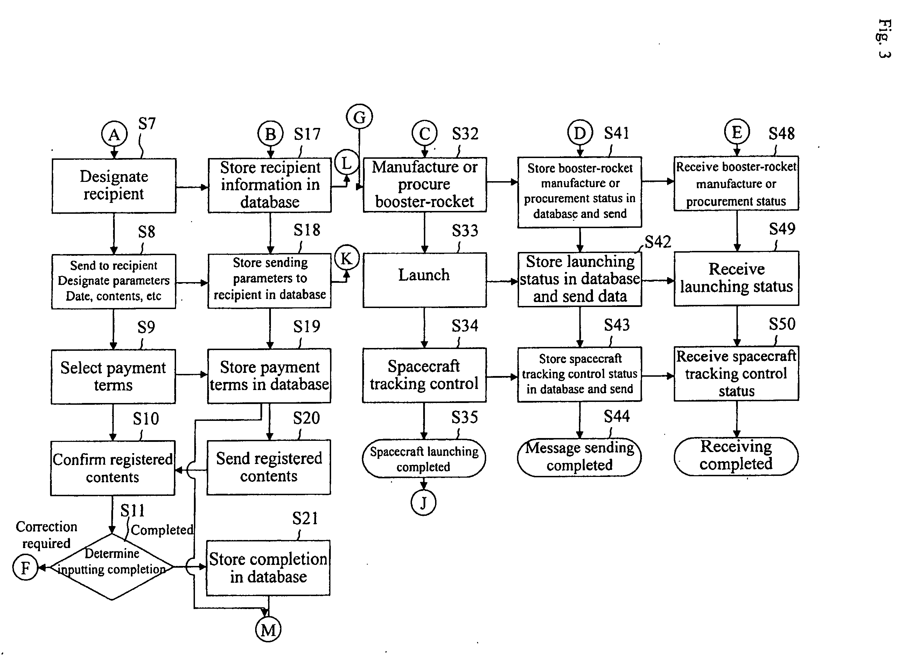

In this message supply system, as shown in Fig. 6 (corresponding to Fig. 3 for explaining the previous example), the flight image of the spacecraft 3 itself and/or the image of the space body 14 is photographed by the photographing device 3A mounted on the spacecraft 3 while the tracking of the spacecraft 3 is being performed by the tracking control device in step 34A, and these images are stored in the database 2 together with the spacecraft tracking control status in step 43A.

The recipient 5 receives a message which is attached with the image stored in the database 2 as mentioned above to the message stored in the spacecraft 3 together with the details and the positional data of the spacecraft 3 at the date designated by the sender 1 in step 50A, whereby the message supply from the sender 1 is completed.

Therefore, in the message supply system described above, the message including unrestricted expression can be supplied to the recipient 5 designated by the sender 1 by designating the date, the number of times and the like, and the details of the spacecraft 3 such as the shape, the flight path, the launching date and the like of the spacecraft 3 can be selected according to the request of the sender 1 and the position or the path of the spacecraft 3 can be confirmed, and additionally the flight images of the spacecraft 3 itself and the other spacecrafts and/or the image of the space body 14 photographed by the photographing device 3A of the spacecraft 3 is attached to the message, so that it is possible to strongly recognize that the message from the sender 1 is sent through the universe.

### (Third example)

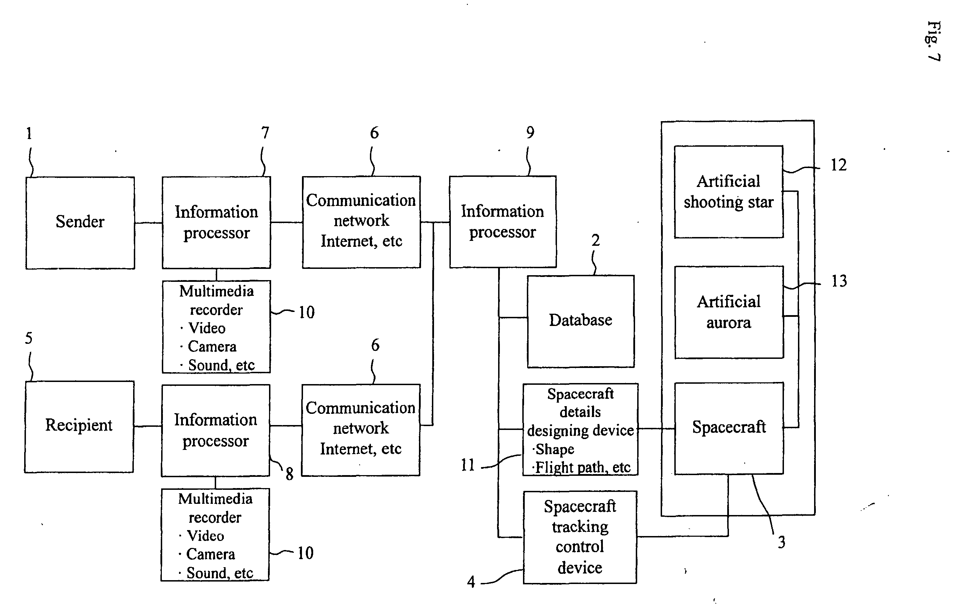

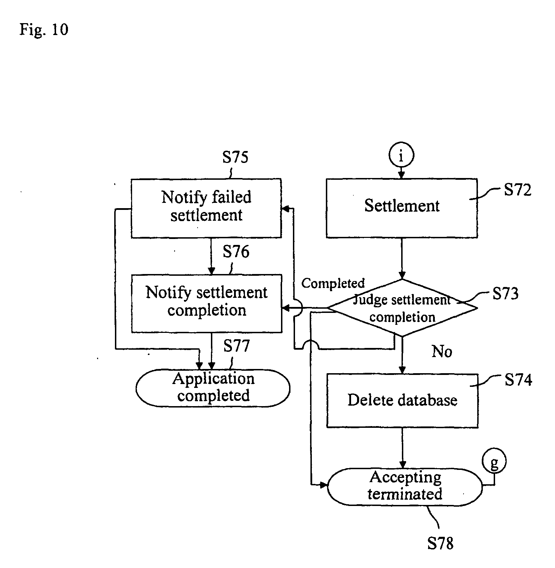

Figs. 7 to 10 show still another example of the message supply system according to the present invention, the message supply system according to this example is different from the message supply system according to the previous examples in the point that means having a function of generating a luminous phenomenon such as an artificial shooting star generating means 12 or an artificial aurora generating means 13 as the visual message is mounted on the spacecraft 3 as shown in Fig. 7, and other configuration is the same as that of the message supply system according to the previous examples.

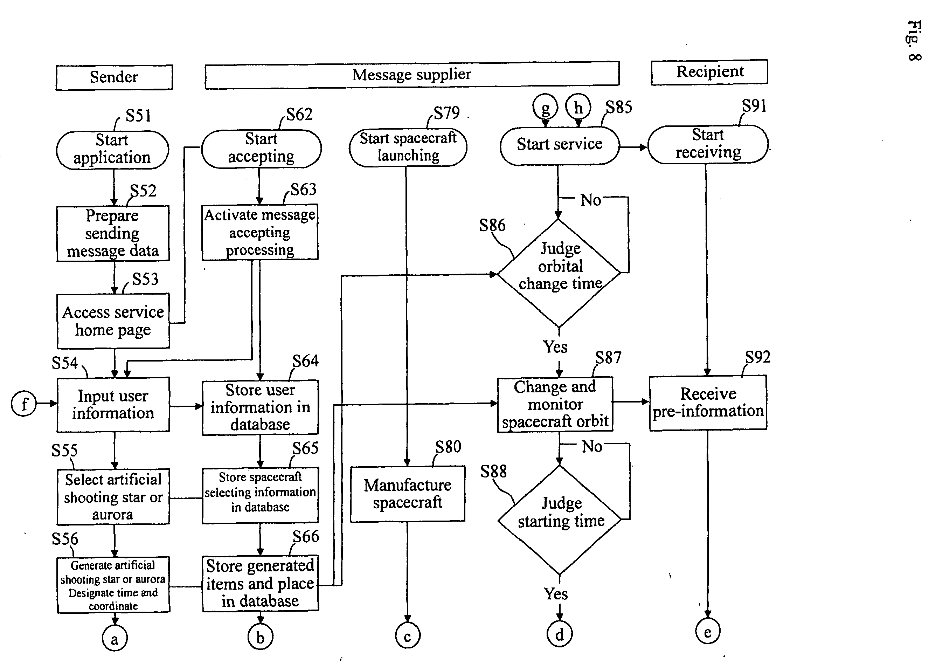

In this message supply system, as shown in Figs. 8 to 10, the sender 1 accesses the home page of the message supplier at first, and performs inputting of user information, selecting of the spacecraft 3 having the artificial shooting star generating means 12 and the spacecraft 3 having the artificial aurora generating means 13 (selecting of the details of the spacecraft 3), designating of specified details of an artificial shooting star or an artificial aurora, designating of the recipient 5, designating of sending parameters to the reception, and designating of payment terms to the message supplier (step 51 to step 59).

On the side of the message supplier, the user information, the spacecraft detail selecting information, the specified details information of the luminous phenomenon, the recipient information, the sending parameters to the reception, and the payment terms are stored in the database 2 in response to the access from the sender 1 (step 62 to step 69), and the registered contents of this kind are returned to the sender 1 (step 70).

When confirmation of the registered contents and judgement of the inputting completion are done by the sender 1 (step 60 and step 61), the completion of the input is stored in the database 2 in step 71 and settlement for this application is performed in step 72 to step 78, the above information stored in the database 2 is entirely deleted when the settlement fail.

When this settlement is completed, the launching program finishes after the steps of manufacturing the selected spacecraft 3, manufacturing (procuring) and launching the booster-rocket, and starting tracking of the spacecraft 3 by the tracking control device (step 79 to step 84).

Also in this example, the spacecraft 3 may be manufactured in a custom-made manner after the input by the user in some cases, and may be manufactured on the basis of the details determined by the message supplier in advance at the stage where applications by a certain number of users are received in other cases.

When judgement of orbital change time of the spacecraft 3, the orbital change of the spacecraft 3 attendant thereon, monitoring of the orbital change and judgement of the starting time of the luminous phenomenon are done in step 85 to step 88 after the launching of this spacecraft 3, the artificial shooting star or artificial aurora is generated in step 89 and step 90.

The recipient 5 receives the orbital change and its monitoring information of the spacecraft 3 in step 92, and visually recognizes the artificial shooting star or the artificial aurora with a pattern desired by the sender 1 at the date designated by the sender 1 and at the place where the recipient 5 can visually recognize in step 93, whereby the message supply from the sender 1 is completed.

Therefore, in the message supply system described above, the message having higher representation effect can be supplied to the recipient 5.

### (Fourth example)

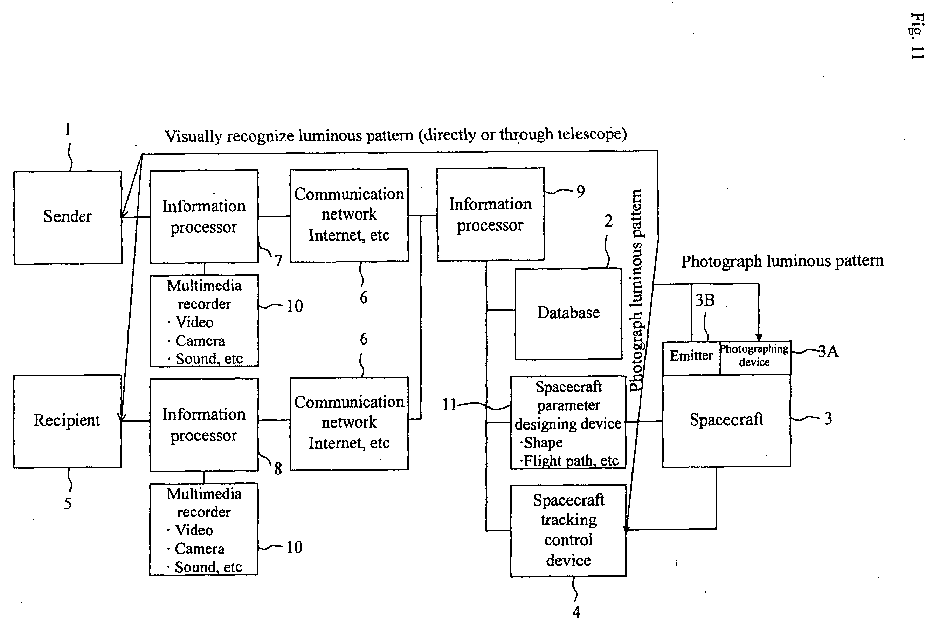

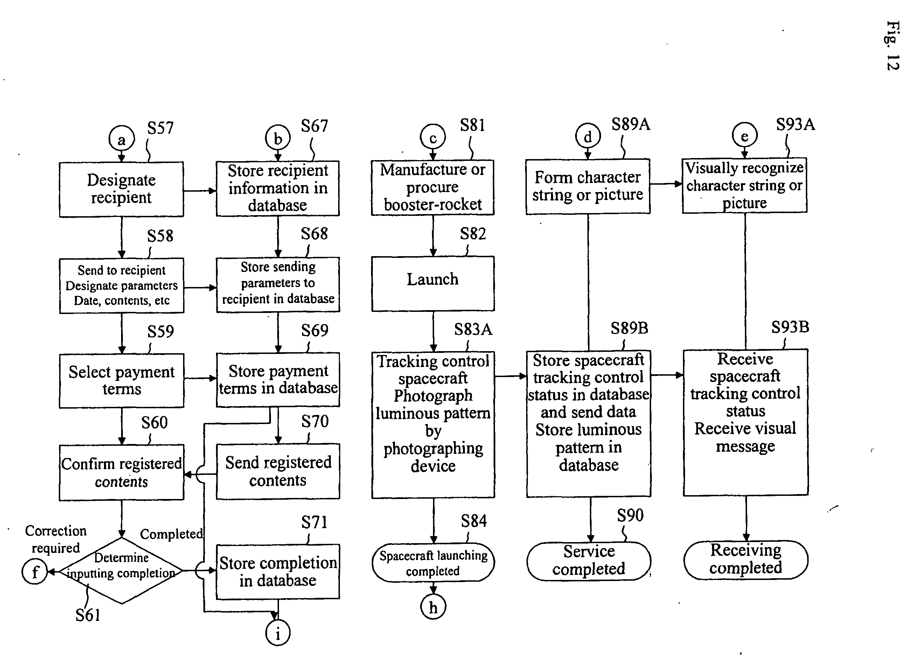

Fig. 11 and Fig. 12 show still another example of the message supply system according to the present invention, the message supply system according to this example is different from the message supply system according to the previous examples in the point that a plurality of emitters (luminous bodies) 3B are mounted on the spacecraft 3 so as to form a character string or a picture as the visual message at the date designated by the sender 1 and at the place where the recipient 5 can visually recognize directly or indirectly through a telescope by selectively flashing these emitters 3B, and the other configuration is the same as that of the message supply system according to the previous examples, as shown in Fig. 11.

In the system according to this example, the photographing device 3A is mounted on the spacecraft 3 so as to store the luminous pattern of the character string or the picture photographed by the photographing device 3A in the database 2.

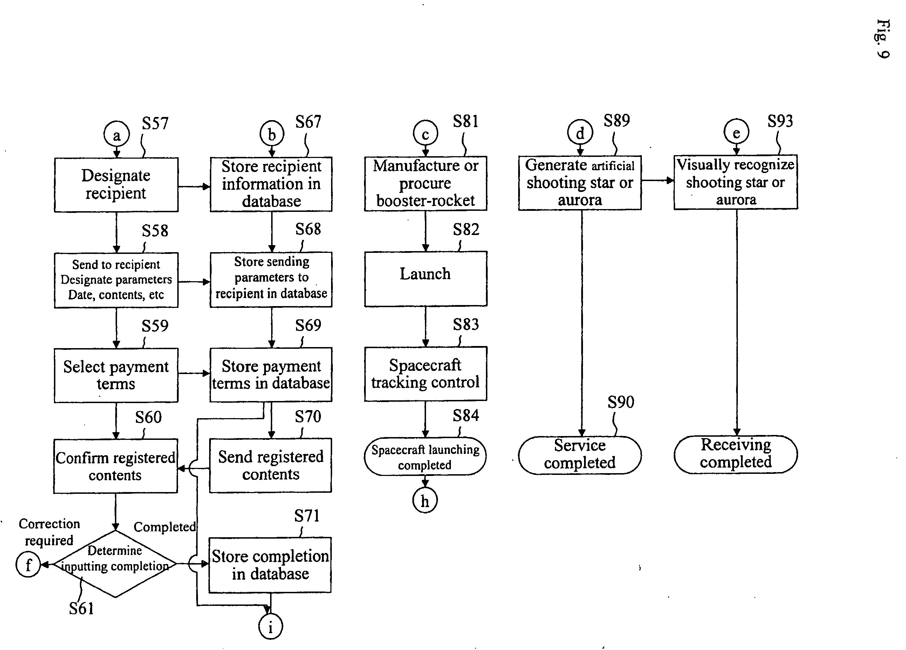

In this message supply system, as shown in Fig. 12 (corresponding to Fig. 9 for explaining the previous example), the character string or the picture of the specific details desired by the sender 1 is formed by selectively flashing the plurality of emitters 3B mounted on the spacecraft 3 in step 89A, and the recipient 5 visually recognizes the character string or the picture as the visual message desired by the sender 1 at the date designated by the sender 1 and at the place where the recipient 5 can visually recognize directly or indirectly through the telescope in step 93A, thereby completing the message supply from the sender 1.

In the system according to this example, the luminous pattern is photographed by the photographing device 3A mounted on the spacecraft 3 in step 83A while the tracking of the spacecraft 3 is being performed by the tracking control device, and this luminous pattern is stored in the database 2 together with the spacecraft tracking control status in step 89B, so that the recipient 5 receives the visual message stored in the database 2 together with the details and the positional data of the spacecraft 3 via the communication network at the date designated by the sender 1 in step 93B' as mentioned above.

Therefore, also in the message supply system described above, the message having higher representation effect can be supplied to the recipient 5, and additionally the message having higher representation effect can be supplied even in a case of bad weather.

### (Fifth example)

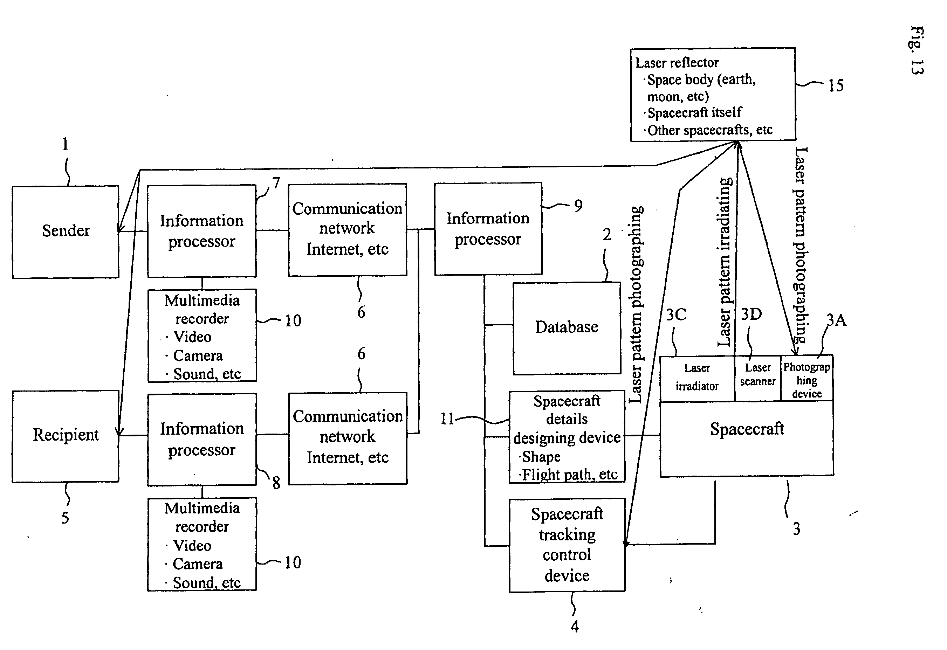

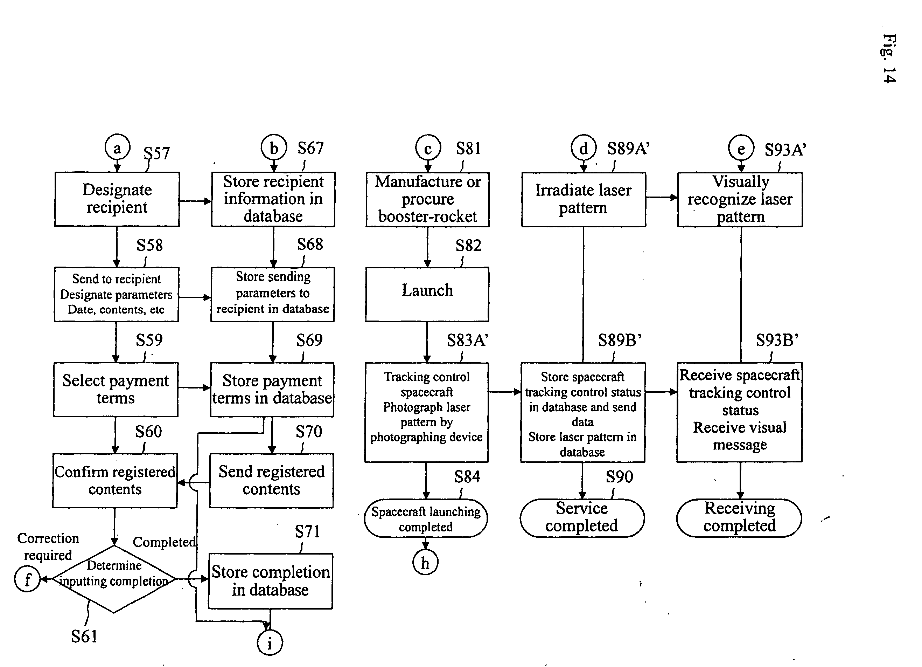

Fig. 13 and Fig. 14 show still another example of the message supply system according to the present invention, the message supply system according to this example is different from the message supply system according to the previous examples in the point that a laser irradiator 3C and a laser scanner 3D are mounted on the spacecraft 3 so as to form a character string or a picture as the visual message at the date designated by the sender 1 and at the place where the recipient 5 can visually recognize directly or indirectly through a telescope by scanning the laser beam irradiated against laser reflector (space body such as the earth including clouds or the moon, the spacecraft 3 itself, or other spacecrafts) 15 as a display panel from the laser irradiator 3C through the laser scanner 3D, and the other configuration is the same as that of the message system according to the previous examples, as shown in Fig. 13.

Also in the system according to this example the photographing device 3A is mounted on the spacecraft 3 so that the character string or the picture photographed by this photographing device 3A may be stored in the database 2.

In this message supply system, as shown in Fig. 14 (corresponding to Fig. 9 for explaining the previous example), the character string or the picture of the specific details desired by the sender 1 is formed by scanning the laser beam irradiated against the laser reflector 15 from the laser irradiator 3C mounted on the spacecraft 3 through the laser scanner 3D in step 89A', and the recipient 5 visually recognizes the character string or the picture as the visual message desired by the sender 1 at the date designated by the sender 1 and at the place where the recipient 5 can visually recognize directly or indirectly through the telescope in step 93A', whereby the message supply from the sender 1 is completed.

In the system of this example, the laser pattern is photographed by the photographing device 3A mounted on the spacecraft 3 in step 83A' while the tracking of the spacecraft 3 is being performed by the tracking control device, and this laser patter is stored in the database 2 together with the spacecraft tracking control status in step 89B' so that the recipient 5 receives the visual message stored in the database 2 together with the details and the positional data of the spacecraft 3 through the communication network at the date designated by the sender 1 in step 93B' as described above.

Therefore, also in the message supply system described above, the message having higher representation effect can be supplied to the recipient 5, and additionally the message having higher representation effect can be supplied even in a case of bad weather.

In each of the above-mentioned examples, it is described about the case where the recipient 5 is present independently from the sender 1, but the present invention may be configured so that the sender 1 may play the role of the recipient 5 by him/herself and receive his/her own message.

The detailed configuration of the message supply system according to the present invention is not limited to the examples described above.

### INDUSTRIAL APPLICABILITY

As described above, in the message supply system characterized by interconnecting the sender, the database, the spacecraft, the spacecraft tracking control device and the recipient via a communication network, storing the message of the sender in at least one of the spacecraft navigating while being acquired in position by the tracking control device and the database on the earth, and supplying the message stored in the spacecraft or the database together with the details and the positional data of the spacecraft to the recipient at the date designated by the sender, and the message supply system further characterized by supplying the message sent from the sender via the communication network as the message of the sender, a remarkably excellent effect can be obtained in that it is possible to supply the message in the unrestricted expressions at designated date, the number of times and so to the recipient designated by the sender, and additionally possible to select the details of the spacecraft such as the shape, the flight path, the launching date and so on of the spacecraft charged with the message according to the preference of the sender, and also possible to confirm the position and the orbit of the spacecraft.

Further, in the message supply system where the message sent from the sender via the communication network to which the flight image of the spacecraft and/or the space body image photographed by the spacecraft is attached is supplied as the message of the sender, it is possible to strongly recognize the fact that the message from the sender is sent though the universe. In the message supply system where the album made by accumulating the flight image of the spacecraft and/or the space body image photographed by the spacecraft in the database is attached to the message sent from the sender via the communication, a remarkably excellent effect can be obtained in that it is possible to supply the more impressive message.

Furthermore, according to the message supply system of this invention using the spacecraft capable of forming the visual message, a remarkably excellent effect can be obtained in that it is possible to form the visual message desired by the sender at the date designated by the sender and at the place where the sender and/or the recipient can visually recognize and possible to supply the message with higher representation effect to the recipient, and specifically in the message supply system where the image of the character string or the picture is supplied as the visual message to the recipient via the communication network, a remarkably excellent effect can be obtained in that it is possible to supply the message with higher representation effect irrespective of weather.

## Claims

1. A message supply system wherein a sender, a database, a spacecraft, a spacecraft tracking control device, and a recipient are interconnected via a communication network, a message of the sender is stored in at least one of the spacecraft navigating while being acquired in position by the tracking control device and the database on the earth, and the message stored in the spacecraft or the database is supplied to the recipient together with details and positional data of the spacecraft at a date designated by the sender.

2. A message supply system according to claim 1, wherein a message sent from the sender via the communication network is supplied as the message of the sender.

3. A message supply system according to claim 2, wherein the message sent from the sender via the communication network to which a flight image of the spacecraft and/or a space body image photographed by the spacecraft is attached is supplied as the message of the sender.

4. A message supply system according to claim 3, wherein an album made by accumulating the flight image of the spacecraft and/or the space body image photographed by the spacecraft in the database is attached to the message sent from the sender via the communication network.

5. A message supply system wherein a sender, a database, a spacecraft capable of forming a visual message, a spacecraft tracking control device, and a recipient are interconnected via a communication network, specified details of the visual message sent from the sender via the communication network are stored in at least one of the spacecraft navigating while being acquired in position by the tracking control device and the database on the earth, and the visual message desired by the sender is formed in accordance with the specified details of the visual message stored in the spacecraft or the database at a date designated by the sender and at a place where the sender and/or the recipient can visually recognize.

6. A message supply system according to claim 5, wherein the visual message is a luminous phenomenon such as aurora or an artificial shooting star generated by the spacecraft.

7. A message supply system according to claim 5, wherein the visual message is a character string or a picture formed by selectively flashing a plurality of emitters provided to the spacecraft.

8. A message supply system according to claim 5, wherein the visual message is a character string or a picture formed by applying sunlight on a plurality of reflectors provided to the spacecraft and selectively reflecting the sunlight from the reflectors.

9. A message supply system according to claim 5, wherein the visual message is a character string or a picture formed by causing spacecrafts having a luminous function to fly in a formation.

10. A message supply system according to any one of claims 7 to 9, wherein an image of a character string or a picture is supplied as the visual message to the recipient via the communication network.

11. A message supply system according to claim 5, wherein the visual message is a character string or a picture formed by scanning a laser beam on a display panel provided to the spacecraft.

12. A message supply system according to claim 5, wherein the visual message is a character string or a picture formed by applying sunlight on a display panel provided to the spacecraft.

13. A message supply system according to claim 5, wherein the visual message is a character string or a picture formed by applying a laser beam radiated from the spacecraft or sunlight reflected from the spacecraft on a reflector.
